# EUROPEAN PATENT SPECIFICATION

(11) **EP 3 796 506 B1**
(45) Date of publication and mention of the grant of the patent: **02.03.2022**
(21) Application number: 19382807.6
(22) Date of filing: 17.09.2019
(51) Int. Cl.: H02J 3/38, H02J 3/48, H02J 3/32, H02J 7/35, H02J 7/00

(54) **METHOD AND INSTALLATION FOR MANAGING ELECTRICAL ENERGY**
VERFAHREN UND ANLAGE ZUR VERWALTUNG VON ELEKTRISCHER ENERGIE
PROCÉDÉ ET INSTALLATION POUR LA GESTION DE L'ÉNERGIE ÉLECTRIQUE

(43) Date of publication of application: 24.03.2021
(73) Proprietor: Ikerlan, S. Coop., 20500 Mondragon (ES)
(72) Inventor: GONZALEZ GARRIDO, Amaia, 20003 DONOSTIA (ES); GAZTAÑAGA ARANZAMENDI, Haizea, 48200 DURANGO (ES); SAEZ DE IBARRA MARTINEZ DE CONTRASTA, Andoni, 01009 VITORIA - GASTEIZ (ES)
(74) Representative: Igartua, Ismael

(56) References cited:
- EP-A1- 2 463 981
- EP-A2- 2 262 077

## Description

### TECHNICAL FIELD

The present invention relates to methods for managing the electrical energy of an electrical energy generation installation, and to associated installations.

### PRIOR ART

The use of renewable power plants, such as solar (photovoltaic) power and wind power plants, for the generation of electrical energy is on the rise. A drawback of power plants of this type is their low controllability, or reduced controllability with respect to conventional power plants, due to fact that the raw material used to generate electrical energy, i.e., the sun and wind, are not controllable. This reduced controllability can affect grid stability, for example.

To increase the flexibility and controllability of power plants of this type, said power plants can incorporate an electrical energy storage system associated with the generation source generating the electrical energy from the sun or wind. By actuating on the storage system, the electrical energy each power plant offers can be better managed, given that the surplus generated energy can be stored in said storage system and the energy required to enable the power plant to supply more electrical energy in the event that the generation source does not generate what is required can be discharged from said storage system. Electrical energy generation installations may comprise one or more power plants, but they generally comprise a plurality of power plants to enable generating and managing a larger amount of electrical energy.

CN105226689A describes an installation with a plurality of power plants comprising energy sources and storage systems, and a method for managing energy for said installation. The method smooths generated energy fluctuations, and to enable carrying out this smoothing, the storage systems are prevented from being fully charged or discharged so as to enable using them for said objective.

EP2463981A1 discloses a method for managing electrical energy of an electrical energy generation installation according to the preamble of claim 1.

### DISCLOSURE OF THE INVENTION

The object of the invention is to provide a method for managing electrical energy of an electrical energy generation installation, and an associated installation, as defined in the claims.

A first aspect of the invention relates to a method which is suitable for managing installations comprising at least a first renewable power plant for electrical energy generation and a second renewable power plant for electrical energy generation, each power plant comprising at least one renewable energy source and at least one energy storage system associated with the corresponding renewable energy source. The storage systems are at least partially charged or discharged when they are actuated.

The generation of a renewable power plant, such as solar power plants and wind power plants, are not considered entirely controllable, given that they depend on weather conditions. The fact that each power plant comprises an energy storage system in addition to an energy source allows obtaining energy from the storage system when the source is not capable of generating the required energy, if this is so required, and storing in the storage system the energy generated by the energy source in surplus of the required energy, if this is so required.

The method comprises an executing cycle in which a respective actuation setpoint is generated for each storage system, and in which said generated actuation setpoints are applied upon said storage systems. The actuation setpoints define the respective actuation upon said storage systems (how much each one has to be charged or discharged).

An executing cycle comprises a generation step in which a respective generation setpoint for each power plant defining the required energy of each power plant is received. This generation setpoint can be generated in a conventional manner, and, for example, the generation forecasts based on weather or meteorological data, the scheduling or temporal costs of the electrical energy, or the demand can be taken into account for generation, and it can be calculated in the installation itself or can be externally generated for the installation.

In the method, the energy generation of each energy source is measured, each generation setpoint is compared with the measured generation of the corresponding power plant, a first differential between the generation and the generation setpoint of the first power plant and a second differential between the generation and the generation setpoint of the second power plant being obtained; both differentials are compared with each other and actuation setpoints to be applied upon the storage systems are generated based on the result of said comparison.

Therefore, with the proposed method, in addition to assuring to the greatest extent the energy supply required for the installation, despite the fact that each power plant that is part of an installation has an assigned respective generation setpoint, which may depend on its own characteristics, when both differentials are compared to one another and actuation setpoints are generated based on the result of said comparison, the final actuation on the storage systems is performed in a coordinated manner between the different power plants (considering what occurs in both power plants), where the charge of a storage system of one power plant can be used, for example, to compensate for the needs of the other power plant. This contributes to reducing storage system deterioration, which is greater the more they are actuated on and the greater the variation of energy is required in same with their actuations, increasing their service life.

A second aspect of the invention relates to an electrical energy generation installation comprising at least a first renewable power plant for energy generation and a second renewable power plant for energy generation, each power plant comprising at least one renewable energy source and at least one energy storage system associated with the corresponding renewable energy source, the energy storage system being at least partially charged or discharged when they are actuated. The installation comprises a control unit configured for performing a method according to the first aspect of the invention and as many sensors as needed to take the required measurements of said method. The advantages described for the method are also valid for the installation.

These and other advantages and features of the invention will become evident in view of the drawings and the detailed description of the invention.

### DESCRIPTION OF THE DRAWINGS

Figure 1 schematically shows an embodiment of the installation according to the invention, with a solar power plant and a wind power plant.
Figure 2 represents an executing cycle of an embodiment of the method of the invention.

### DETAILED DISCLOSURE OF THE INVENTION

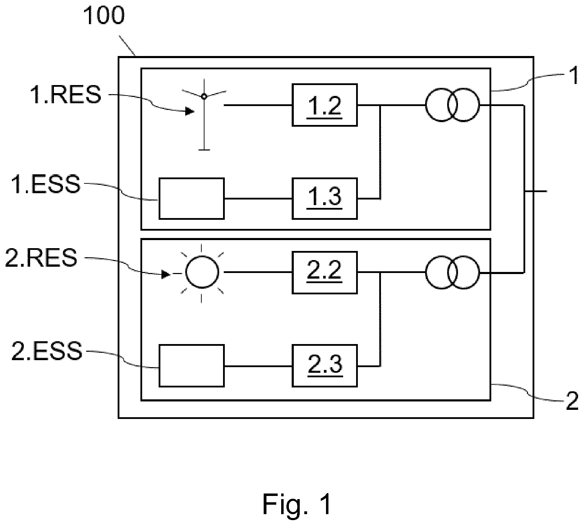

A first aspect of the invention relates to a method which is suitable for managing electrical energy of an electrical energy generation installation 100, like the one schematically shown in Figure 1 by way of example. The installation 100 comprises at least a first renewable power plant 1 for energy generation and a second renewable power plant 2 for energy generation, each power plant comprising 1 and 2 at least one respective renewable energy source 1.RES and 2. RES and at least one respective energy storage system 1.ESS and 2. ESS associated with the corresponding renewable energy source 1.RES and 2.RES. Each storage system 1.ESS and 2.ESS is at least partially charged or discharged when it is actuated, and it may comprise a battery or an array of batteries connected to one another, for example.

The renewable energy source 1.RES and 2.RES and the storage system 1.ESS and 2.ESS of each power plant 1 and 2 are connected in parallel, said joining being the output of the corresponding power plant 1 and 2. In each case, between said joining and the renewable energy source 1.RES and 2.RES and between said joining and the storage system 1.ESS and 2.ESS, each power plant 1 and 2 may further comprise a converter 1.2 and 1.3, and 2.2 and 2.3 for controlling and converting the electrical power to be supplied to the grid.

The two power plants 1 and 2 are furthermore joined in parallel (their outputs), said joining being the output of installation 100, as shown in Figure 1 by way of example, the energy generated by both power plants 1 and 2 thus being added together to obtain the total energy supplied to the grid by the installation 100.

The method comprises an executing cycle C in which a respective actuation setpoint 1.9 and 2.9 is generated for each storage system 1.ESS and 2.ESS, and in which said generated actuation setpoints 1.9 and 2.9 are applied upon said storage systems 1.ESS and 2.ESS (at the end of the executing cycle C). Each actuation setpoint 1.9 and 2.9 defines the actuation on the corresponding storage system 1.ESS and 2.ESS, i.e., how much energy is to be charged in or discharged from the corresponding storage system 1.ESS and 2.ESS.

The executing cycle C comprises an actuation step S1 in which a respective generation setpoint 1.0 and 2.0 is received for each power plant 1 and 2. Each generation setpoint 1.0 and 2.0 defines the required energy of each power plant 1 and 2. Generation setpoints 1.0 and 2.0 can be generated as described above. Generation setpoints 1.0 and 2.0 of this type generally take into account the so-called automatic generation control (commonly known as AGC), which refers to changes in generation requested by the grid operator, and they are updated from outside the installation 100, usually in a periodic manner (every 4 seconds, for example).

In the actuation step S1, the energy being generated by each renewable energy source 1.RES and 2.RES is furthermore measured and each generation setpoint 1.0 and 2.0 is compared with the measured generation of the corresponding power plant 1 and 2, a first differential between the measured generation and the generation setpoint 1.0 of the first power plant 1 and a second differential between the measured generation and the generation setpoint 2.0 of the second power plant 2 being obtained, and said differential being a charge differential when the corresponding generation setpoint 1.0 and 2.0 is less than the measured generation (the corresponding renewable energy source 1.RES and 2.RES generates more energy than what is required by means of the corresponding generation setpoint 1.0 and 2.0) and a discharge differential when the corresponding generation setpoint 1.0 and 2.0 is greater than the measured generation (the corresponding renewable energy source 1.RES and 2.RES generates less energy than what is required by means of the corresponding generation setpoint 1.0 and 2.0). It is therefore possible to know whether or not each renewable energy source 1.RES and 2.RES is capable of generating the amount of energy that is required from the corresponding generation setpoint 1.0 and 2.0.

In the actuation step S1, once the differentials described above have been obtained, both differentials are compared to one another, and based on the result of said comparison, actuation setpoints 1.9 and 2.9 are generated for the storage systems 1.ESS and 2.ESS. The result of the comparison can lead to the following situations:
1. The differential of one power plant 1 and 2 is a charge differential and the differential of the other power plant 1 and 2 is a discharge differential. The corresponding actuation on the storage systems 1.ESS and 2.ESS is analyzed below, taking into account actuation setpoints 1.9 and 2.9 which are generated in an executing cycle C.
2. The differential of both power plants 1 and 2 is a charge differential. In this case, both renewable energy sources 1.RES and 2.RES generate more energy than that required by the respective setpoints 1.0 and 2.0, and they utilize the surplus generated energy to charge the corresponding storage system 1.ESS and 2.ESS. Based on the state of charge (commonly known as SOC) of each storage system 1.ESS and 2.ESS, and, where appropriate, the state of health (commonly known as SOH), which is analyzed below, all or only part of the surplus energy is stored (which allows for the capacity of the corresponding storage system 1.ESS and 2.ESS).
3. The differential of both power plants 1 and 2 is a discharge differential. In this case, both renewable energy sources 1.RES and 2.RES generate less energy than that required by respective generation setpoints 1.0 and 2.0, and they require energy stored in the corresponding storage system 1.ESS and 2.ESS. Each storage system 1.ESS and 2.ESS then discharges the necessary amount (the corresponding differential) or the maximum amount possible (in the event that it has less stored energy than what is needed), based on the corresponding state of charge (SOC) and, where appropriate, state of health (SOH).
4. The differential of one power plant 1 and 2 is a charge differential and the differential 1.1 and 2.1 of the other power plant 1 and 2 is zero. In this case, one of the power plants 1 and 2 generates more energy than that required by the corresponding generation setpoint 1.0 and 2.0, and surplus generated energy is utilized to charge the corresponding storage system 1.ESS and 2.ESS, actuating on said storage system 1.ESS and 2.ESS. Based on the state of charge of said storage system 1.ESS and 2.ESS and, where appropriate, the state of health, all or only part of the surplus energy is stored. The other storage system 1.ESS and 2.ESS, in principle, does not require any actuation whatsoever (it is neither charged nor discharged).
5. The differential of one power plant 1 and 2 is a discharge differential and the differential of the other power plant 1 and 2 is zero. In this case, one of the renewable energy sources 1.RES and 2.RES generates less energy than that required by the corresponding generation setpoint 1.0 and 2.0, and requires energy stored in the corresponding storage system 1.ESS and 2.ESS. Said storage system 1.ESS and 2.ESS is then actuated on to discharge the necessary amount (the corresponding differential) or the maximum amount possible (in the event that it has less stored energy than what is needed), based on the corresponding state of charge and, where appropriate, the state of health (SOH). The other storage system 1.ESS and 2.ESS, in principle, does not require any actuation whatsoever (it is neither charged nor discharged).
6. Both differentials are zero. In this case, the two renewable energy sources 1.RES and 2.RES generate the energy required by their respective generation setpoints 1.0 and 2.0, and no actuation on the storage systems 1.ESS and 2.ESS is required (neither the charging nor discharging of the storage system 1.ESS and 2.ESS is required). In this situation, neither of the storage systems 1.ESS and 2.ESS is actuated on. Not actuating on a storage system 1.ESS and 2.ESS, as described above, implies that said storage system 1.ESS and 2.ESS is neither charged nor discharged, the corresponding state of charge SOC1 and SOC2 being kept constant (if the inherent losses that the storage system 1.ESS and 2.ESS itself may have are not considered). The energy required for the installation 100 (sum of generation setpoints 1.0 and 2.0) is thus provided without needing to actuate on the storage systems 1.ESS and 2.ESS, which implies that these situations do not affect the efficiency and service life of the storage systems 1.ESS and 2.ESS.

When it is determined that the differential of one power plant 1 and 2 is a charge differential and the differential of the other power plant 1 and 2 is a discharge differential (the first situation from among those mentioned above), in the actuation step S1 it is determined whether the absolute value of both differentials is equal or different (the numerical value, not taking the sign into account) and actuation setpoints 1.9 and 2.9 are generated based on said determination. The actuation upon both storage systems 1.ESS and 2.ESS can thereby be coordinated based on the total needs of the installation 100 and not of the power plants 1 and 2 individually, which allows enabling a more efficient management of the energy of the installation 100 and of said actuation on said storage systems 1.ESS and 2.ESS.

In the event that both absolute values are equal, the actuation setpoint s1.9 and 2.9 are preferably generated such that the storage systems 1.ESS and 2.ESS are not actuated upon, given that the sum of the two energy generations (which is generated between both power plants 1 and 2) is equal to the sum of the two generation setpoints 1.0 and 2.0, regardless of the fact that each power plant 1 and 2 does not generate the energy required by the corresponding generation setpoint 1.0 and 2.0. Any actuation upon the storage systems 1.ESS and 2.ESS is thus prevented as a result of the coordination between the two power plants 1 and 2, while at the same time the installation 100 supplies the required energy (sum of the two generation setpoints 1.0 and 2.0).

In this situation, like in the case where both differentials are zero, no actuation upon the storage systems 1.ESS and 2.ESS is required. Not actuating upon a storage system 1.ESS and 2.ESS, as described above, implies that said storage system 1.ESS and 2.ESS is neither charged nor discharged, the corresponding state of charge SOC1 and SOC2 being kept constant (if the inherent losses that the storage system 1.ESS and 2.ESS itself may have are not considered). The energy required for the installation 100 (sum of the generation setpoints 1.0 and 2.0) is thus provided without needing to actuate upon the storage systems 1.ESS and 2.ESS, regardless of whether each power plant 1 and 2 is capable of generating the amount of energy required of it, which implies that these situations do not affect the efficiency and service life of the storage systems 1.ESS and 2.ESS.

In the event that both absolute values are different, if the absolute value of the charge differential is greater than the absolute value of the discharge differential, the sum of the generation of both renewable energy sources 1.RES and 2.RES is greater than the energy required by the sum of the two generation setpoints 1.0 and 2.0, such that there is a surplus energy generation in the installation 100 and, to the extent possible, this surplus will be charged in at least one of the storage systems 1.ESS and 2.ESS. In this case, to reduce actuations upon the storage systems 1.ESS and 2.ESS and thus increase their service life, actuation setpoints 1.9 and 2.9 are generated which preferably imply an energy charge for the storage system 1.ESS and 2.ESS associated with the power plant 1 and 2 with which the charge differential (an amount of energy equal to the difference between both differentials) is associated, but it does not imply any actuation upon the other storage system 1.ESS and 2.ESS. Therefore, with these actuation setpoints 1.9 and 2.9, that which the power plant 1 and 2 with the discharge differential is missing in order to reach its generation setpoint 1.0 and 2.0 would be supplied by the other power plant 1 and 2, and the surplus generation would be loaded in the storage system 1.ESS and 2.ESS of this latter power plant 1 and 2.

Thus, with these actuation setpoints 1.9 and 2.9 at least part of the surplus generation of a renewable energy source 1.RES and 2.RES is used to make up for the generation deficiencies of the other renewable energy source 1.RES and 2.RES, and only the storage system 1.ESS and 2.ESS with a charge differential is actuated upon. Therefore, actuation setpoints 1.9 and 2.9 are generated so that the storage system 1.ESS and 2.ESS with a charge differential is charged based on the difference between both absolute values, and so that the storage system 1.ESS and 2.ESS with a discharge differential is not actuated upon. In other words, the storage system 1.ESS and 2.ESS with a charge differential will be charged to a lesser extent, given that part of the surplus energy is used to make up for the generation deficiencies of the other power plant 1 and 2, so that no actuation upon the storage system 1.ESS and 2.ESS with a discharge differential has to be performed. This allows actuating as little as possible on the storage systems 1.ESS and 2.ESS, and with the smallest variation possible (lower charge and/or discharge amount) to supply the total energy required, thereby increasing their service life.

If the absolute value of the discharge differential is greater than the absolute value of the charge differential, the sum of the generation of both renewable energy sources 1.RES and 2.RES is less than the energy required by the sum of the two generation setpoints 1.0 and 2.0, such that less energy than what is required is generated in the installation 100, and, to the extent possible, this missing energy will be discharged from at least one of the storage systems 1.ESS and 2.ESS. In this case, to reduce actuations upon the storage systems 1.ESS and 2.ESS and thus increase their service life, actuation setpoints 1.9 and 2.9 are generated which preferably imply an energy discharge for the storage system 1.ESS and 2.ESS associated with the power plant 1 and 2 with which the discharge differential is associated, but it does not imply any actuation upon the other storage system 1.ESS and 2.ESS with which the discharge differential is associated.

Therefore, with these actuation setpoints 1.9 and 2.9 the surplus generation of a renewable energy source 1.RES and 2.RES is used to make up in part for the generation deficiencies of the other renewable energy source 1.RES and 2.RES, and only the storage system 1.ESS and 2.ESS of this latter renewable energy source 1.RES and 2.RES with the difference between the discharge difference and the charge difference is actuated upon. Therefore, a specific amount of energy will be discharged from the storage system 1.ESS and 2.ESS of the power plant 1 and 2 with a discharge differential, whereas the storage system 1.ESS and 2.ESS of the power plant 1 and 2 with a charge differential is not actuated upon. In other words, the storage system 1.ESS and 2.ESS of the power plant 1 and 2 with a discharge differential will be discharged to a lesser extent, given that the surplus energy of the other power plant 1 and 2 is used to make up for the generation deficiencies of said power plant 1 and 2 with a discharge differential, so that no actuation upon the storage system 1.ESS and 2.ESS with a charge differential has to be performed. This allows actuating as little as possible upon the storage systems 1.ESS and 2.ESS, and with the smallest variation possible (lower charge and/or discharge amount) to supply the total energy required, thereby increasing their service life.

In the actuation step S1, preferably the state of charge of the storage systems 1.ESS and 2.ESS is considered to generate actuation setpoints 1.9 and 2.9. The state of charge is preferably measured in a periodic manner, with a predefined time period, and said measurement does not have to be part of the actuation step S1. The energy stored in the storage systems 1.ESS and 2.ESS is thus determined based on said detections and how much can be charged or discharged is known in each case. If the state of charge allows it, the amount of energy charged in or discharged from the corresponding storage system 1.ESS or 2.ESS is equal to the difference between both differentials, whereas if it does not allow it, the amount it does allow (which will be less than that required) will be charged or discharged. As a result, in the case of charging a storage system 1.ESS or 2.ESS, the amount of energy supplied from the corresponding power plant 1 or 2 is equal to the amount of energy generated by the renewable energy source 1.RES or 2.RES minus the amount of energy charged in said storage system 1.ESS or 2.ESS; and in the case of discharging a storage system 1.ESS or 2.ESS, the amount of energy supplied from the corresponding power plant 1 or 2 is equal to the amount of energy generated by the renewable energy source 1.RES or 2.RES plus the amount of energy discharged from said storage system 1.ESS or 2. ESS.

Preferably, to calculate the energy stored in a storage system 1.ESS and 2.ESS the state of health (SOH) of said storage system 1.ESS and 2.ESS is furthermore determined, and the state of health is multiplied by the nominal capacity of said storage system 1.ESS and 2.ESS. This multiplication results in the current capacity of the corresponding storage system 1.ESS and 2.ESS, and multiplying this capacity by the corresponding state of charge obtains the stored energy in said storage systems 1.ESS and 2.ESS. The nominal capacity is data inherent to the storage system 1.ESS and 2.ESS itself, and the state of health is a known parameter that can be obtained in a conventional manner and represents a lesser or higher degree of degradation in the state of the storage system 1.ESS and 2.ESS. This state depends on the use of said storage systems 1.ESS and 2.ESS, both by the number of actuations required on them and on the variation of charge required in each actuation. These determinations are preferably performed in a periodic manner, with a predefined time period, and do not have to be part of the actuation step S1.

In this manner, the amount of energy that is discharged from a storage system 1.ESS and 2.ESS is equal to the difference between both differentials if the stored amount of energy in said storage system 1.ESS and 2.ESS is equal to or greater than said difference, said discharged amount being equal to said stored amount in the opposite case; and the amount of energy that is charged in a storage system 1.ESS and 2.ESS is equal to the difference between both differentials if the difference between the current capacity of the storage system 1.ESS and 2.ESS and the stored amount of energy is equal to or greater than said difference, said charged amount being equal to said difference in the opposite case.

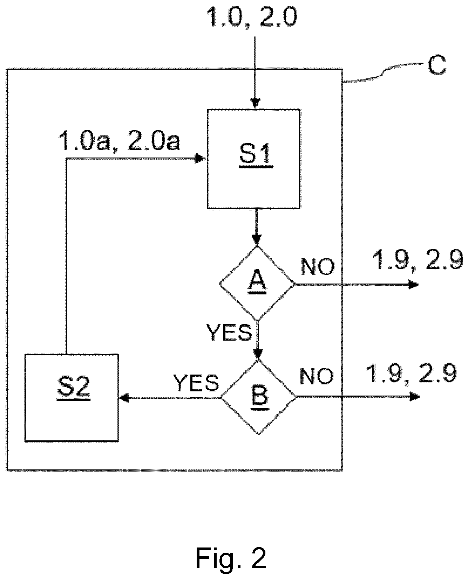

Preferably, after generating the actuation setpoints in the actuation step S1 of an executing cycle C, the amount of energy that each power plant 1 and 2 would supply in the event of applying the generated actuation setpoints 1.9 and 2.9 upon the storage systems 1.ESS and 2.ESS is determined, and both amounts are compared with the corresponding generation setpoints 1.0 and 2.0. If as a result it is identified that the amount of energy that one power plant 1 and 2 would supply is less than its generation setpoint 1.0 and 2.0 and that the energy that the other power plant 1 and 2 would supply is at least equal to its generation setpoint 1.0 and 2.0 (step B in Figure 2), an adjustment step S2 is executed in the executing cycle C. In the opposite case, said actuation setpoints 1.9 and 2.9 are applied upon the storage systems 1.ESS and 2.ESS and the executing cycle C ends.

As described above, the generation setpoints 1.0 and 2.0 generally comprise the energy required by automatic generation control (AGC). The energy supplied by each power plant 1 and 2 is used first to meet generation requirements due to other criteria, using the last part to meet requirements due to automatic generation control. As there are two power plants 1 and 2, it would be normal to distribute between the two power plants 1 and 2 the automatic generation control requirements, considering the specific circumstances of each one, whereby in the situation described in the preceding section one of the two power plants 1 and 2 does not meet this requirement. To avoid this situation, or to reduce it as much as possible, the two generation setpoints 1.0 and 2.0 are adjusted in the adjustment step S2, which leads to new calculation of the actuation setpoints 1.9 and 2.9, as described in detail below.

The adjustment of the generation setpoints 1.0 and 2.0 is performed based on the difference between the respective initial generation setpoints 1.0 and 2.0 and the amount of energy that the power plant 1 and 2 that does not generate the corresponding initial generation setpoint 1.0 and 2.0 would supply. As a result, adjusted generation setpoints 1.0a and 2.0a are obtained, and the actuation step S1 is implemented again using said adjusted generation setpoints 1.0a and 2.0a as received generation setpoints. Usually, the adjusted generation setpoint 1.0a and 2.0a of the power plant 1 and 2 that does not generate the initial generation setpoint 1.0 and 2.0 corresponds with the generation capacity of said power plant 1 and 2, and the adjusted generation setpoint 1.0a and 2.0a of the other power plant 1 and 2 preferably corresponds with a value which implies that the sum of both adjusted generation setpoints 1.0a and 2.0a is equal to the sum of the initial generation setpoints 1.0 and 2.0. Preferably, to adjust the generation setpoints 1.0 and 2.0 the current capacity and the energy stored in the corresponding storage system 1.ESS and 2.ESS and the generation capacity of the corresponding renewable energy source 1.RES and 2.RES are also considered.

Preferably, in one and the same executing cycle C, the actuation step S1 is executed twice at most, whereby to enable executing the adjustment step S2, in addition to the condition described above, it is identified if the executed actuation step S1 was the first generation step S1 of said executing cycle C (step A in Figure 2). If it was so, the adjustment step S2 can be executed, but if it was not so, the executing cycle C is ended and the determined actuation setpoints 1.9 and 2.9 would be the setpoints to finally be applied on the storage systems 1.ESS and 2.ESS. As an alternative to the depiction of Figure 1, steps A and/or B could be part of the generation step S1.

After this point and until a new implementation of an executing cycle C, the power plants 1 and 2 are actuated under these criteria.

The executing cycle C is executed in real time, and executing cycles C are executed in the method in a periodic manner or on demand (by the controller of the grid or of the installation 100, for example, or based on premises determined as external modifications of the generation setpoints 1.0 and 2.0).

Preferably, the power plants 1 and 2 are of different types, thus one of them being wind power plant and the other one a photovoltaic power plant. When calculating the setpoints 1.0 and 2.0, generation forecasts based on weather or meteorological data are taken into account, as described above, and using power plants 1 and 2 of different types allows reducing the total error due to forecasts that are later not met. The photovoltaic and wind power plants have complementary generation profiles, therefore, usually, if the forecast of a solar power plant is greater than the generation which is finally produced, the forecast of a wind power plant is less than the generation which is finally produced. This usually occurs because if it becomes cloudy, the possibilities of there being wind, or of said wind increasing in intensity, is higher, whereby that which is lost with respect to the forecast with one power plant 1 and 2 may be compensated for at least in part with the other one, as a result of the proposed method.

A second aspect of the invention relates to an electrical energy generation installation 100 such as the one described above. The installation 100 therefore comprises at least a first renewable power plant 1 for energy generation and a second renewable power plant 2 for energy generation, each power plant 1 and 2 comprising at least one renewable energy source 1.RES and 2.RES and at least one energy storage system 1.ESS and 2.ESS associated with the renewable energy source 1.RES and 2.RES. The storage systems 1.ESS and 2.ESS are at least partially charged or discharged when they are actuated.

The installation 100 is suitable for supporting a method according to the first aspect of the invention, in any of its embodiments. To that end, it may comprise as many sensors as needed to take the required measurements (sensors not depicted in the drawings), and a control unit with calculating capacity to enable supporting and executing said method (not depicted in the drawings). The control unit may comprise a processor, a microprocessor, a controller, an FPGA, or any device with calculating capacity.

As described above, the renewable energy source 1.RES and 2.RES and the storage system 1.ESS and 2.ESS of each power plant 1 and 2 are connected in parallel, said joining being the output of the corresponding power plant 1 and 2. In each case, between said joining and the renewable energy source 1.RES and 2.RES and between said joining and the storage system 1.ESS and 2.ESS each power plant 1 and 2 may further comprise a converter 1.2 and 1.3, and 2.2 and 2.3 for converting the energy in electrical energy to be supplied to the grid. The two power plants 1 and 2 are furthermore joined in parallel (their outputs), said joining being the output of the installation 100, as shown in Figure 1 by way of example, the energy generated by both power plants 1 and 2 thus being added together to obtain the total energy generated by the installation 100.

Preferably, one of the power plants 1 or 2 is a photovoltaic power plant, and the other power plant 1 or 2 is a wind power plant, with the advantages which this entails and which have been explained above.

## Claims

1. Method for managing electrical energy of an electrical energy generation installation (100), the installation (100) comprising at least a first renewable power plant (1) for energy generation and a second renewable power plant (2) for energy generation, each power plant (1, 2) comprising at least one renewable energy source (1.RES, 2.RES), and at least one energy storage system (1.ESS, 2.ESS) associated with the corresponding renewable energy source (1.RES, 2.RES), which are at least partially charged or discharged when they are actuated, the method comprising an executing cycle (C) in which a respective actuation setpoint (1.9, 2.9) is generated for each storage system (1.ESS, 2.ESS), said actuation setpoints (1.9, 2.9) defining the actuation upon said storage systems (1.ESS, 2.ESS), and in which said generated actuation setpoints (1.9, 2.9) are applied upon said storage systems (1.ESS, 2.ESS), the executing cycle (C) comprising an actuation step (S1) in which a respective energy generation setpoint (1.0, 2.0) is received for each power plant (1, 2), the energy generation of each renewable energy source (1.RES, 2.RES) is measured, each generation setpoint (1.0, 2.0) is compared with the corresponding measured generation, a first differential between the generation and the generation setpoint (1.0) of the first power plant (1) and a second differential between the generation and the generation setpoint (2.0) of the second power plant (2) being obtained, **characterized in that,** in the method, both differentials are compared with each other, and actuation setpoints (1.9, 2.9) are generated based on the result of said comparison.

2. Method according to claim 1, wherein a differential is a charge differential when the generation setpoint (1.0, 2.0) is less than the corresponding measured generation and a discharge differential when the generation setpoint (1.0, 2.0) is greater than the corresponding measured generation, and wherein, in the actuation step (S1), if during the comparison between both differentials it is determined that the differential of one power plant (1, 2) is a charge differential and the differential of the other power plant (1, 2) is a discharge differential, it is furthermore determined whether the absolute value of both differentials is equal or different, the actuation setpoints (1.9, 2.9) being generated based on said last determination.

3. Method according to claim 2, wherein, if during the comparison between both differentials it is determined that the differential of one power plant (1, 2) is a charge differential and the differential of the other power plant (1, 2) is a discharge differential, and that the absolute value of both differentials is equal, actuation setpoints (1.9, 2.9) are generated such that they do not imply any actuation whatsoever upon the storage systems (1.ESS, 2.ESS).

4. Method according to claim 2 or 3, wherein, if during the comparison between both differentials it is determined that the differential of one power plant (1, 2) is a charge differential, that the differential of the other power plant (1, 2) is a discharge differential, and that the absolute value of both differentials is different, actuation setpoints (1.9, 2.9) are generated such that, with their subsequent application, in the event that the absolute value of the discharge differential is greater than the absolute value of the charge differential, it causes an amount of energy equal to the difference between both differentials, or as close as possible to said amount, to be discharged from the storage system (1.ESS, 2.ESS) of the power plant (1, 2) with the discharge differential and it causes no actuation upon the other storage system (1.ESS, 2.ESS), and in the event that the absolute value of the charge differential is greater than the absolute value of the discharge differential, it causes an amount of energy coming from the corresponding renewable energy source (1.RES, 2.RES) equal to the difference between both differentials, or as close as possible to said amount, to be charged in the storage system (1.ESS, 2.ESS) of the power plant (1, 2) with the charge differential and it causes no actuation upon the other storage system (1.ESS, 2.ESS).

5. Method according to claim 4, wherein, in the actuation step (S1), the state of charge of the storage systems (1.ESS, 2.ESS) is furthermore detected or measured and actuation setpoints (1.9, 2.9) are generated furthermore considering said states of charge, said states of charge in addition to the difference between both differentials thus being taken into account to determine the amount of energy to be charged in or discharged from the storage systems (1.ESS, 2ESS).

6. Method according to claim 5, wherein, in the actuation step (S1), the state of health of the storage systems (1.ESS, 2.ESS) is furthermore determined, and, in each case, the determined state of health is multiplied by the nominal capacity of the corresponding storage system (1.ESS, 2.ESS), obtaining the current capacity of said storage system (1.ESS, 2.ESS) as a result, and multiplying said result by the corresponding state of charge, the result of said multiplication being the stored amount of energy in the corresponding storage system (1.ESS, 2.ESS), said stored amounts of energy in addition to the difference between both differentials being considered to generate respective actuation setpoints (1.9, 2.9).

7. Method according to claim 6, wherein actuation setpoints (1.9, 2.9) are generated such that, with their application, the amount of energy to be discharged from one storage system (1.ESS, 2.ESS) is equal to the difference between both differentials if the stored amount of energy is equal to or greater than said difference, said amount to be discharged being equal to said stored amount in the opposite case, and such that the amount of energy to be charged in one storage system (1.ESS, 2.ESS) is equal to the difference between both differentials if the difference between the current capacity of the storage system (1.ESS, 2.ESS) and the stored amount of energy is equal to or greater than said difference, said amount to be charged being equal to said difference in the opposite case.

8. Method according to any of claims 1 to 7, wherein, after generating the actuation setpoints (1.9, 2.9) in the actuation step (S1) of an executing cycle (C), the amount of energy that each power plant (1, 2) would supply in the event of applying the actuation setpoints (1.9, 2.9) generated in said actuation step (S1) is determined, both amounts are compared with the corresponding generation setpoints (1.0, 2.0), and, if as a result it is identified that the amount of energy that one power plant (1, 2) would supply is less than its generation setpoint (1.0, 2.0) and that the energy that the other power plant (1, 2) would supply is at least equal to its generation setpoint (1.0, 2.0), an adjustment step (S2) is executed in the executing cycle (C) in which the value of both generation setpoints (1.0, 2.0) is adjusted based on the difference between the initial generation setpoint (1.0, 2.0) and the amount of energy that the power plant (1, 2) would supply which is less than said initial generation setpoint (1.0, 2.0), respective adjusted generation setpoints (1.0a, 2.0a) being generated and the actuation step (S1) being implemented again considering said adjusted generation setpoints (1.0a, 2.0a) as received generation setpoints.

9. Method according to claim 8, wherein after generating the actuation setpoints (1.9, 2.9) in the actuation step (S1) of an executing cycle (C), it is determined whether an actuation step (S1) has previously been executed in said executing cycle (C), the executing cycle (C) ending if it has, and determining whether the adjustment step (S2) is to be executed if it has not.

10. Electrical energy generation installation comprising at least a first renewable power plant (1) for energy generation and a second renewable power plant (2) for energy generation, each power plant (1, 2) comprising at least one renewable energy source (1.RES, 2.RES) and at least one energy storage system (1.ESS, 2.ESS) associated with the corresponding renewable energy source (1.RES, 2.RES), which are at least partially charged or discharged when they are actuated, **characterized in that** the installation (100) comprises a control unit with calculating capacity configured for executing a method according to any of the preceding claims and as many sensors as needed to take the required measurements of said method.

11. Installation according to claim 10, wherein one of the power plants (1, 2) is a photovoltaic power plant and the other one of the power plants (1, 2) is a wind power plant.

## Patentansprüche

1. Verfahren zur Verwaltung von elektrischer Energie einer elektrischen Energieerzeugungsanlage (100), wobei die Anlage (100) mindestens ein erstes erneuerbares Kraftwerk (1) zur Energieerzeugung und ein zweites erneuerbares Kraftwerk (2) zur Energieerzeugung umfasst, wobei jedes Kraftwerk (1, 2) mindestens eine erneuerbare Energiequelle (1.RES, 2.RES) und mindestens ein mit der entsprechenden erneuerbaren Energiequelle (1.RES, 2.RES) assoziiertes Energiespeichersystem (1.ESS, 2.ESS), welche mindestens teilweise aufgeladen oder entladen werden, wenn sie betätigt werden, umfasst, wobei das Verfahren ein Ausführungszyklus (C) umfasst, in welchem ein jeweiliger Betätigungssollwert (1.9, 2.9) für jedes Speichersystem (1.ESS, 2.ESS) erzeugt wird, wobei die genannten Betätigungssollwerte (1.9, 2.9) die Betätigung auf die genannten Speichersysteme (1.ESS, 2.ESS) definieren, und in welchem die genannten erzeugten Betätigungssollwerte (1.9, 2.9) auf die genannten Speichersysteme (1.ESS, 2.ESS) angewendet werden, wobei der Ausführungszyklus (C) einen Betätigungsschritt (S1) umfasst, in welchem ein jeweiliger Energieerzeugungssollwert (1.0, 2.0) für jedes Kraftwerk (1, 2) empfangen wird, die Energieerzeugung jeder erneuerbaren Energiequelle (1.RES, 2.RES) gemessen wird, jeder Erzeugungssollwert (1.0, 2.0) mit der entsprechenden gemessenen Erzeugung verglichen wird, wobei ein erstes Differenzial zwischen der Erzeugung und dem Erzeugungssollwert (1.0) des ersten Kraftwerks (1) und ein zweites Differenzial zwischen der Erzeugung und dem Erzeugungssollwert (2.0) des zweiten Kraftwerks (2) erhalten werden, **dadurch gekennzeichnet dass,** im Verfahren, beide Differenziale miteinander verglichen werden und Betätigungssollwerte (1.9, 2.9) basierend auf dem Ergebnis des genannten Vergleichs erzeugt werden.

2. Verfahren nach Anspruch 1, wobei ein Differenzial ein Aufladungsdifferenzial ist, wenn der Erzeugungssollwert (1.0, 2.0) kleiner als die entsprechende gemessene Erzeugung ist, und ein Entladungsdifferenzial ist, wenn der Erzeugungssollwert (1.0, 2.0) größer als die entsprechende gemessene Erzeugung, ist, und wobei, im Betätigungsschritt (S1), wenn es während des Vergleichs zwischen beiden Differenzialen bestimmt wird, dass das Differenzial eines Kraftwerks (1, 2) ein Aufladungsdifferenzial ist und das Differenzial des anderen Kraftwerks (1, 2) ein Entladungsdifferenzial ist, es zusätzlich bestimmt wird, ob der Absolutwert beider Differenziale gleich oder unterschiedlich ist, wobei die Betätigungssollwerte (1.9, 2.9) basierend auf der genannten letzten Bestimmung erzeugt werden.

3. Verfahren nach Anspruch 2, wobei, wenn es während des Vergleichs zwischen beiden Differenzialen bestimmt wird, dass das Differenzial eines Kraftwerks (1, 2) ein Aufladungsdifferenzial ist und das Differenzial des anderen Kraftwerks (1, 2) ein Entladungsdifferenzial ist, und dass der Absolutwert beider Differenziale gleich ist, Betätigungssollwerte (1.9, 2.9) erzeugt werden, sodass sie keinerlei Betätigung auf die Speichersysteme (1.ESS, 2.ESS) bedeuten.

4. Verfahren nach Anspruch 2 oder 3, wobei, wenn es während des Vergleichs zwischen beiden Differenzialen bestimmt wird, dass das Differenzial eines Kraftwerks (1, 2) ein Aufladungsdifferenzial ist, dass das Differenzial des anderen Kraftwerks (1, 2) ein Entladungsdifferenzial ist und dass der Absolutwert beider Differenziale unterschiedlich ist, Betätigungssollwerte (1.9, 2.9) erzeugt werden, sodass, mit deren nachträglicher Anwendung, im Falle, dass der Absolutwert des Entladungsdifferenzials größer als der Absolutwert des Aufladungsdifferenzials ist, dies die Entladung einer Menge von Energie gleich dem Unterschied zwischen beiden Differenzialen, oder so nah wie möglich an der genannten Menge, aus dem Speichersystem (1.ESS, 2.ESS) des Kraftwerks (1, 2) mit dem Entladungsdifferenzial bewirkt und dies keine Betätigung auf das andere Speichersystem (1.ESS, 2.ESS) bewirkt, und im Falle, dass der Absolutwert des Aufladungsdifferenzials größer als der Absolutwert des Entladungsdifferenzials ist, dies die Aufladung einer Menge von Energie stammend aus der entsprechenden erneuerbaren Energiequelle (1.RES, 2.RES) gleich dem Unterschied zwischen beiden Differenzialen, oder so nah wie möglich an der genannten Menge, im Speichersystem (1.ESS, 2.ESS) des Kraftwerks (1, 2) mit dem Aufladungsdifferenzial bewirkt und dies keine Betätigung auf das andere Speichersystem (1.ESS, 2.ESS) bewirkt.

5. Verfahren nach Anspruch 4, wobei, im Betätigungsschritt (S1), der Ladezustand der Speichersysteme (1.ESS, 2.ESS) zusätzlich erfasst oder gemessen wird und Betätigungssollwerte (1.9, 2.9) unter zusätzlicher Betrachtung der genannten Ladezustände erzeugt werden, wobei somit die genannten Ladezustände zusätzlich zum Unterschied zwischen beiden Differenzialen berücksichtig werden, um die Menge von Energie zu bestimmen, welche in die Speichersysteme (1.ESS, 2ESS) aufgeladen werden soll oder daraus entladen werden soll.

6. Verfahren nach Anspruch 5, wobei, im Betätigungsschritt (S1), der Alterungszustand der Speichersysteme (1.ESS, 2.ESS) zusätzlich bestimmt wird, und, in jedem Fall, der bestimmte Alterungszustand mit der Nennleistung des entsprechenden Speichersystems (1.ESS, 2.ESS) multipliziert wird, unter Erhalt der Momentanleistung des genannten Speichersystems (1.ESS, 2.ESS) als Ergebnis, und das genannte Ergebnis mit dem entsprechenden Ladezustand multipliziert wird, wobei das Ergebnis der genannten Multiplikation die gespeicherte Menge von Energie im entsprechenden Speichersystem (1.ESS, 2.ESS) ist, wobei die genannten gespeicherten Mengen von Energie zusätzlich zum Unterschied zwischen beiden Differenzialen betrachtet werden, um jeweilige Betätigungssollwerte (1.9, 2.9) zu erzeugen.

7. Verfahren nach Anspruch 6, wobei Betätigungssollwerte (1.9, 2.9) erzeugt werden, sodass, mit deren Anwendung, die Menge von Energie, welche aus einem Speichersystem (1.ESS, 2.ESS) entladen werden soll, gleich dem Unterschied zwischen beiden Differenzialen ist, wenn die gespeicherte Menge von Energie gleich oder größer als der genannte Unterschied ist, wobei im entgegengesetzten Fall die genannte Menge, welche entladen werden soll, gleich der genannten gespeicherten Menge ist, und sodass die Menge von Energie, welche in einem Speichersystem (1.ESS, 2.ESS) aufgeladen werden soll, gleich dem Unterschied zwischen beiden Differenzialen ist, wenn der Unterschied zwischen der Momentanleistung des Speichersystems (1.ESS, 2.ESS) und der gespeicherten Menge von Energie gleich oder größer als der genannte Unterschied ist, wobei im entgegengesetzten Fall die genannte Menge, welche aufgeladen werden soll, gleich dem genannten Unterschied ist.

8. Verfahren nach einem der Ansprüche 1 bis 7, wobei, nach der Erzeugung der Betätigungssollwerte (1.9, 2.9) im Betätigungsschritt (S1) eines Ausführungszyklus (C), die Menge von Energie, welche jedes Kraftwerk (1, 2) im Falle der Anwendung der Betätigungssollwerte (1.9, 2.9), welche im genannten Betätigungsschritt (S1) erzeugt wurden, zuführen würde, bestimmt wird, beide Mengen mit den entsprechenden Erzeugungssollwerten (1.0, 2.0) verglichen werden, und, wenn es als Ergebnis identifiziert wird, dass die Menge von Energie, die ein Kraftwerk (1, 2) zuführen würde, kleiner als dessen Erzeugungssollwert (1.0, 2.0) ist und dass die Energie, die das andere Kraftwerk (1, 2) zuführen würde, mindestens gleich dessen Erzeugungssollwert (1.0, 2.0) ist, ein Einstellungsschritt (S2) im Ausführungszyklus (C) ausgeführt wird, in welchem der Wert beider Erzeugungssollwerte (1.0, 2.0) eingestellt wird, basierend auf dem Unterschied zwischen dem anfänglichen Erzeugungssollwert (1.0, 2.0) und der Menge von Energie, die das Kraftwerk (1, 2) zuführen würde, welche kleiner als der genannte anfängliche Erzeugungssollwert (1.0, 2.0) ist, wobei jeweilige eingestellte Erzeugungssollwerte (1.0a, 2.0a) erzeugt werden und wobei der Betätigungsschritt (S1) erneut unter Betrachtung der genannten eingestellten Erzeugungssollwerte (1.0a, 2.0a) als empfangene Erzeugungssollwerte implementiert wird.

9. Verfahren nach Anspruch 8, wobei es nach der Erzeugung der Betätigungssollwerte (1.9, 2.9) im Betätigungsschritt (S1) eines Ausführungszyklus (C) bestimmt wird, ob ein Betätigungsschritt (S1) zuvor im genannten Ausführungszyklus (C) ausgeführt worden ist, wobei der Ausführungszyklus (C) endet, wenn es so ist, und es bestimmt wird, ob der Einstellungsschritt (S2) ausgeführt werden soll, wenn es nicht so ist.

10. Elektrische Energieerzeugungsanlage umfassend mindestens ein erstes erneuerbares Kraftwerk (1) zur Energieerzeugung und ein zweites erneuerbares Kraftwerk (2) zur Energieerzeugung, wobei jedes Kraftwerk (1, 2) mindestens eine erneuerbare Energiequelle (1.RES, 2.RES) und mindestens ein mit der entsprechenden erneuerbaren Energiequelle (1.RES, 2.RES) assoziiertes Energiespeichersystem (1.ESS, 2.ESS) umfasst, welche mindestens teilweise aufgeladen oder entladen werden, wenn sie betätigt werden, **dadurch gekennzeichnet, dass** die Anlage (100) eine Steuereinheit mit Rechenkapazität, welche dazu ausgebildet ist, ein Verfahren nach einem der vorhergehenden Ansprüche auszuführen, und so viele Sensoren wie nötig, um die benötigten Messungen des genannten Verfahrens vorzunehmen, umfasst.

11. Anlage nach Anspruch 10, wobei eins der Kraftwerke (1, 2) ein photovoltaisches Kraftwerk ist und das andere der Kraftwerke (1, 2) ein Windkraftwerk ist.

## Revendications

1. Procédé pour la gestion de l'énergie électrique d'une installation de génération d'énergie électrique (100), l'installation (100) comprenant au moins une première centrale d'énergie renouvelable (1) pour la génération d'énergie et une seconde centrale d'énergie renouvelable (2) pour la génération d'énergie, chaque centrale d'énergie (1, 2) comprenant au moins une source d'énergie renouvelable (1.RES, 2.RES), et au moins un système de stockage d'énergie (1.ESS, 2.ESS) associé à la source d'énergie renouvelable correspondante (1.RES, 2.RES), qui sont chargés ou sont déchargés au moins partiellement lorsqu'ils sont actionnés, le procédé comprenant un cycle d'exécution (C) dans lequel une valeur de consigne d'actionnement respectif (1.9, 2.9) est générée pour chaque système de stockage (1.ESS, 2.ESS), lesdites valeurs de consigne d'actionnement (1.9, 2.9) définissant l'actionnement sur lesdits systèmes de stockage (1.ESS, 2.ESS), et dans lequel lesdites valeurs de consigne d'actionnement générées (1.9, 2.9) sont appliquées auxdits systèmes de stockage (1.ESS, 2.ESS), le cycle d'exécution (C) comprenant une étape d'actionnement (S1) dans laquelle une valeur de consigne de génération d'énergie respective (1.0, 2.0) est reçue pour chaque centrale d'énergie (1, 2), la génération d'énergie de chaque source d'énergie renouvelable (1.RES, 2.RES) est mesurée, chaque valeur de consigne de génération (1.0, 2.0) est comparée avec la génération mesurée correspondante, un premier différentiel entre la génération et la valeur de consigne de génération (1.0) de la première centrale d'énergie (1) et un second différentiel entre la génération et la valeur de consigne de génération (2.0) de la seconde centrale d'énergie (2) étant obtenus, **caractérisé en ce que,** dans le procédé, les deux différentiels sont comparés entre eux et des valeurs de consigne d'actionnement (1.9, 2.9) sont générées en fonction du résultat de ladite comparaison.

2. Procédé selon la revendication 1, dans lequel un différentiel est un différentiel de charge lorsque la valeur de consigne de génération (1.0, 2.0) est inférieure à la génération mesurée correspondante et un différentiel de décharge lorsque la valeur de consigne de génération (1.0, 2.0) est supérieure à la génération mesurée correspondante, et dans lequel, dans l'étape d'actionnement (S1), si pendant la comparaison entre les deux différentiels il est déterminé que le différentiel d'une centrale d'énergie (1, 2) est un différentiel de charge et le différentiel de l'autre centrale d'énergie (1, 2) est un différentiel de décharge, il est en plus déterminé si la valeur absolue des deux différentiels est égale ou différente, les valeurs de consigne d'actionnement (1.9, 2.9) étant générées en fonction de ladite dernière détermination.

3. Procédé selon la revendication 2, dans lequel, si pendant la comparaison entre les deux différentiels, il est déterminé que le différentiel d'une centrale d'énergie (1, 2) est un différentiel de charge et le différentiel de l'autre centrale d'énergie (1, 2) est un différentiel de décharge, et que la valeur absolue des deux différentiels est égale, des valeurs de consigne d'actionnement (1.9, 2.9) sont générées de telle manière qu'elles n'impliquent absolument aucun actionnement sur les systèmes de stockage (1.ESS, 2.ESS).

4. Procédé selon la revendication 2 ou 3, dans lequel, si pendant la comparaison entre les deux différentiels, il est déterminé que le différentiel d'une centrale d'énergie (1, 2) est un différentiel de charge, que le différentiel de l'autre centrale d'énergie (1, 2) est un différentiel de décharge et que la valeur absolue des deux différentiels est différente, des valeurs de consigne d'actionnement (1.9, 2.9) sont générées de telle manière que, avec leur application postérieure, dans le cas où la valeur absolue du différentiel de décharge est supérieure à la valeur absolue du différentiel de charge, l'on provoque qu'une quantité d'énergie égale à la différence entre les deux différentiels, ou la plus semblable possible à ladite quantité, soit déchargée depuis le système de stockage (1.ESS, 2.ESS) de la centrale d'énergie (1, 2) avec le différentiel de décharge et l'on ne provoque aucun actionnement sur l'autre système de stockage (1.ESS, 2.ESS), et dans le cas où la valeur absolue du différentiel de charge est supérieure à la valeur absolue du différentiel de décharge, l'on provoque qu'une quantité d'énergie provenant de la source d'énergie renouvelable correspondante (1.RES, 2.RES) égale à la différence entre les deux différentiels, ou la plus semblable possible à ladite quantité, soit chargée dans le système de stockage (1.ESS, 2.ESS) de la centrale d'énergie (1, 2) avec le différentiel de charge et l'on ne provoque aucun actionnement sur l'autre système de stockage (1.ESS, 2.ESS).

5. Procédé selon la revendication 4, dans lequel, dans l'étape d'actionnement (S1), l'état de charge des systèmes de stockage (1.ESS, 2.ESS) est en outre détecté ou mesuré et des valeurs de consigne d'actionnement (1.9, 2.9) sont générées en considérant en outre lesdits états de charge, en tenant donc compte desdits états de charge en plus de la différence entre les deux différentiels pour déterminer la quantité d'énergie à être chargée ou déchargée à partir des systèmes de stockage (1.ESS, 2ESS).

6. Procédé selon la revendication 5, dans lequel, dans l'étape d'actionnement (S1), l'état de santé des systèmes de stockage (1.ESS, 2.ESS) est en outre déterminé et, dans chaque cas, l'état de santé déterminé est multiplié par la capacité nominale du système de stockage correspondant (1.ESS, 2.ESS), obtenant comme résultat la capacité actuelle dudit système de stockage (1.ESS, 2.ESS) et multipliant ledit résultat par l'état de charge correspondant, le résultat de ladite multiplication étant la quantité d'énergie stockée dans le système de stockage correspondant (1.ESS, 2.ESS), lesdites quantités d'énergie stockées étant considérées en plus de la différence entre les deux différentiels pour générer des valeurs de consigne d'actionnement respectives (1.9, 2.9).

7. Procédé selon la revendication 6, dans lequel des valeurs de consigne d'actionnement (1.9, 2.9) sont générées de telle manière que, avec leur application, la quantité d'énergie à être déchargée à partir d'un système de stockage (1.ESS, 2.ESS) est égale à la différence entre les deux différentiels si la quantité d'énergie stockée est égale ou supérieure à ladite différence, ladite quantité à être déchargée étant égale à ladite quantité stockée dans le cas opposé, et de telle manière que la quantité d'énergie à être chargée dans un système de stockage (1.ESS, 2.ESS) est égale à la différence entre les deux différentiels si la différence entre la capacité actuelle du système de stockage (1.ESS, 2.ESS) et la quantité d'énergie stockée est égale ou supérieure à ladite différence, ladite quantité à être chargée étant égale à ladite différence en cas opposé.

8. Procédé selon l'une quelconque des revendications 1 à 7, dans lequel, après avoir généré les valeurs de consigne d'actionnement (1.9, 2.9) dans l'étape d'actionnement (S1) d'un cycle d'exécution (C), la quantité d'énergie que fournira chaque centrale d'énergie (1, 2) dans le cas d'application des valeurs de consigne d'actionnement (1.9, 2.9) générées dans ladite étape d'actionnement (S1) est déterminée, les deux quantités sont comparées avec les valeurs de consigne de génération correspondantes (1.0, 2.0) et, si comme résultat il est identifié que la quantité d'énergie que fournira une centrale d'énergie (1, 2) est inférieure à sa valeur de consigne de génération (1.0, 2.0) et que l'énergie que fournira l'autre centrale d'énergie (1, 2) est au moins égale à sa valeur de consigne de génération (1.0, 2.0), une étape d'ajustement (S2) est exécutée dans le cycle d'exécution (C) dans laquelle la valeur des deux valeurs de consigne de génération (1.0, 2.0) est ajustée en fonction de la différence entre la valeur de consigne de génération initiale (1.0, 2.0) et la quantité d'énergie que fournira la centrale d'énergie (1, 2) qui est inférieure à ladite valeur de consigne de génération initiale (1.0, 2.0), des valeurs de consigne de génération ajustés respectives (1.0a, 2.0a) étant générées et l'étape d'actionnement (S1) étant implantée de nouveau en considérant lesdites valeurs de consigne de génération ajustées (1.0a, 2.0a) comme valeurs de consigne de génération reçues.

9. Procédé selon la revendication 8, dans lequel, après avoir généré les valeurs de consigne d'actionnement (1.9, 2.9) dans l'étape d'actionnement (S1) d'un cycle d'exécution (C), il est déterminé si une étape d'actionnement (S1) a été exécutée antérieurement dans ledit cycle d'exécution (C), le cycle d'exécution (C) terminant si c'est le cas, et déterminant si l'étape d'ajustement (S2) doit être exécutée si ce n'est pas le cas.

10. Installation de génération d'énergie électrique qui comprend au moins une première centrale d'énergie renouvelable (1) pour la génération d'énergie et une seconde centrale d'énergie renouvelable (2) pour la génération d'énergie, chaque centrale d'énergie (1, 2) comprenant au moins une source d'énergie renouvelable (1.RES, 2.RES) et au moins un système de stockage d'énergie (1.ESS, 2.ESS) associé avec la source d'énergie renouvelable correspondante (1.RES, 2.RES), qui sont chargés ou sont déchargés au moins partiellement lorsqu'ils sont actionnés, **caractérisée en ce que** l'installation (100) comprend une unité de contrôle avec capacité de calcul configurée pour exécuter un procédé selon l'une quelconque des revendications précédentes et autant de capteurs que nécessaire pour prendre les mesures requises dudit procédé.

11. Installation selon la revendication 10, dans laquelle l'une des centrales d'énergie (1, 2) est une centrale d'énergie photovoltaïque et l'autre des centrales d'énergie (1, 2) est une centrale d'énergie éolienne.
